# EUROPÄISCHE PATENTSCHRIFT

(11) **EP 1 415 060 B1**
(45) Veröffentlichungstag und Bekanntmachung des Hinweises auf die Patenterteilung: **09.03.2005**
(21) Anmeldenummer: 02730177.9
(22) Anmeldetag: 19.04.2002
(51) Int. Cl.: E05C 9/18, B23K 26/00

(54) **BESCHLAG**
FITTING
FERRURE

(30) Priorität: 10.08.2001 DE 10138293
(43) Veröffentlichungstag der Anmeldung: 06.05.2004
(73) Patentinhaber: SIEGENIA-AUBI KG, 57234 Wilnsdorf (DE)
(72) Erfinder: LOOS, Horst, 57258 Freudenberg (DE)
(86) Internationale Anmeldenummer: PCT/EP2002/004317
(87) Internationale Veröffentlichungsnummer: WO 2003/014500

(56) Entgegenhaltungen:
- EP-A- 0 870 890
- WO-A-01/33114
- DE-A- 3 143 637
- DE-A- 19 916 220
- DE-A- 19 920 832

## Beschreibung

Gegenstand der Erfindung ist ein Beschlag nach dem Oberbegriff des Anspruchs 1 sowie ein Verfahren zur Herstellung eines Schließzapfens entsprechend dem Oberbegriff des Anspruchs 8.

Schließzapfen, welche als sogenannte Pilzkopfzapfen ausgebildet sind und an ihrem Ende einen Verriegelungsvorsprung aufweisen, der einen Hinterschnitt bildet, mit dem ein hinterschnittener Bereich eines Riegeleingriffs zumindest in der Verschlussstellung hintergriffen werden kann, sind bereits seit langem bekannt. So geht beispielsweise aus der DE-GM 84 02 163 ein derartiger Beschlag hervor, bei dem ein Pilzkopfzapfen an einer Treibstange befestigt ist. Der Pilzkopfzapfen greift in Verschlussstellung in ein Riegeleingriff ein, der im wesentlichen einen doppel-C-förmigen Querschnitt besitzt. Dadurch entsteht in dem Riegeleingriff ein hinterschnittener Bereich, während die aufeinander weisenden Enden des doppelt-C-förmigen Querschnitts eine Öffnung bilden, die auf einen verjüngten Schaft des Pilzkopfzapfens abgestimmt ist. Zum einen wird mittels des Schaftes eine Abstützung des Schließzapfens am Riegelteil bewirkt und andererseits ein Herausheben des Schließzapfens aus dem Schließteil, z.B. bei einem Einbruch zumindest erschwert.

Die herkömmliche Art, dererlei Schließzapfen herzustellen, besteht in einer spanenden Bearbeitung, wobei von dem ursprünglichen Durchmesser lediglich der verbreiterte Verriegelungsvorsprung erhalten bleibt. Somit ist der Schließzapfen im Bereich des wesentlich länger ausgebildeten Schaftes sowie im Bereich eines Befestigungssockels, der bei der DE-GM 84 02 163 eine Stulpschiene in einem Langloch durchgreift und in der Treibstange festgesetzt wird, entsprechend zu verjüngen, also spanend abzutragen.

Es sind auch andere Fertigungsverfahren bereits erprobt worden, beispielsweise die Herstellung mittels Kaltverformen aus einem Draht. Dabei lassen sich jedoch Einschnürungen o. dgl. nicht oder nur mit großem Aufwand herstellen.

Andere Herstellungsvarianten ergeben sich beispielsweise aus der DE 199 16 220 A1, DE 199 16 940 A1, DE 199 20 832 A1 oder der DE 197 15 055 A1.

Bei allen diesen Lösungen ist der verbreiterte Verriegelungsvorsprung als Hülse ausgebildet, die auf ein Gewinde des Befestigungssockels aufgeschraubt wird. Hintergrund hierfür ist vor allem eine gewünschte Anpassbarkeit des Schließzapfens in axialer Richtung, so dass ein sich mit Zeitablauf verändernder Abstand des Flügelfalzes vom Rahmenfalz mittels der Justiermöglichkeit ausgeglichen werden kann.

Nachteilig bei dem erstgenannten Schließzapfen nach der DE-GM 84 02 163 ist es, dass die Bearbeitung des Schließzapfens eine umfangreiche Bearbeitung notwendig macht. Auch die letztgenannten Ausführungsbeispiele sind vergleichsweise aufwendig, insbesondere, da zwei Gewindeschneidvorgänge an den Hülsen und den Befestigungssockeln vorgesehen werden müssen und auch eine Verdrehsicherung der Hülsen vorzusehen ist.

Hinzu kommt, dass sich die Anforderungen an den Schließzapfen bezüglich der Verschleißfestigkeit einerseits und der Verarbeitbarkeit andererseits gegenüberstehen. Es wird nämlich gefordert, dass die Oberfläche des Schließzapfens möglichst hart sein soll, damit beim Einfahren in den Riegeleingriff der Schaft und der Verriegelungsvorsprung nicht unnötig verschleißen, andererseits muss aber der Sockel noch plastisch verformbar bleiben, z.B. um einen Nietvorgang mit einer Treibstange oder ähnlichem vornehmen zu können.

Der Erfindung liegt daher die Aufgabe zugrunde, einen Beschlag bereit zu stellen, bei dem die Herstellung des Schließzapfens vereinfacht wird.

Die Lösung dieser Aufgabe gelingt durch die im kennzeichnenden Teil des Anspruchs 1 angegebenen Merkmale. Das Verfahren zur Herstellung eines Schließzapfens ist in Anspruch 8 angegeben.

Die Erfindung geht dabei von der Erkenntnis aus, dass die Herstellung zunächst scheinbar aufwendiger wird, in dem ein weiterer Arbeitsgang notwendig wird, dass aber auf dieser Weise die Bestandteile des Schließzapfens, z.B. durch Kaltformen in einfacher Art und Weise und darüber hinaus kostengünstig herstellen lassen.

Insbesondere die Verbindung mittels Laserschweißen lässt dabei neben einer hohen Stückzahl auch eine große Genauigkeit der Verbindung zu und bietet daneben auch den Vorteil, dass die vergleichsweise kleinen Bauteile in dafür vorgesehenen Vorrichtungen automatisiert handhabbar sind.

Besonders vorteilhaft ist dabei die Ausgestaltung, nach der der Befestigungssockel und der Kopf aus Metallkörpern unterschiedlicher Legierung und/oder Wärmebehandlung bestehen. Dadurch kann beispielsweise der Anforderung der Montage an dem Beschlag Rechnung getragen werden, indem der Befestigungssockel aus einem - gegenüber dem Kopf - leichter verformbaren Legierung besteht und dass der Kopf dem entgegen aus einer verschleißfesteren Metalllegierung besteht oder z.B. durch eine Wärmebehandlung entsprechend vorbereitet ist.

Dadurch lässt sich nach einer weiteren Ausgestaltung der Befestigungssockel über eine Nietverbindung der Treibstange zuordnen.

Um die Verschleißhärte des Kopfes zu maximieren, kann vorgesehen werden, dass der Kopf einsatzgehärtet ist.

Um die Verbindung des Kopfes mit dem Befestigungssockel zu vereinfachen, ist ferner vorgesehen, dass die Verbindungsstelle aus einer Mulde im Befestigungssockel und einem komplementär dazu geformten Ansatz am Kopf besteht. Dadurch kann die Zuordnung der Teile in der Vorrichtung wesentlich vereinfacht werden. Die Mulde läßt im wesentlichen nur eine Lage des komplementär zur Mulde geformten Ansatzes zu, so dass eine Relativausrichtung des T-förmigen Kopfes zum Befestigungssockel in jedem Fall gegeben ist.

Vorteilhaft ist es auch, wenn die Mulde in einem verbreiterten Flansch des Befestigungssockels vorgesehen ist. Zum einen kann sich der verbreiterte Flansch bei einer Montage an einer unterhalb einer Stulpschiene längsverschiebbaren Treibstange an der Treibstange abstützen und andererseits kann über den verbreiterten Flansch eine bessere Handhabung des Befestigungssockels insbesondere bei der Herstellung der Verbindung erfolgen.

Von besonderem Vorteil ist es dabei auch, wenn der verbreiterte Flansch eine Werkzeugaufnahme bildet, mit der eine Verdrehung des Flansches relativ zu einem sich daran exzentrisch gelagerten Befestigungszapfen bewirkt werden kann. Dadurch wird der in einer Bohrung z.B. der Treibstange aufgenommene Befestigungszapfen bei einer Drehung um den Flansch gehalten, so dass der Flansch entsprechend der exzentrischen Verlagerung zusammen mit dem Verriegelungsvorsprung relativ dazu bewegt wird. Die Anordnung des Werkzeugeingriffs an dem Flansch verhindert aber eine entsprechende Drehbewegung an dem Schließzapfen, so dass entsprechende Torsionskräfte der Verbindungsstelle vermieden werden.

Eine vorteilhafte Ausgestaltung insbesondere der Verbindungsstelle sieht ferner vor, dass sich der Ansatz an den verjüngenden Schaft des T-förmigen Kopfes anschließt. Dadurch lässt sich der Ansatz auf einfache Art und Weise herstellen und begünstigt die Herstellung des T-förmigen Kopfes als Kaltformteil.

Eine zweckmäßige, weil einfache und kostengünstige Herstellung des Schließzapfens ist weiterhin gegeben, wenn in den mit unterschiedlichen Abmessungen zugrunde liegenden Beschlagbauteilen des Beschlags, der T-förmige Kopf mit den dazu vorgesehenen, d.h. den Beschlagbauteilen angepassten, Zapfen in Verbindung tritt.

Schließlich wird nach Anspruch 8 auch ein Verfahren zur Herstellung eines Schließzapfens mit einem gegenüber dem Schaft verbreiterten Verriegelungsvorsprung beansprucht. Durch das vorgeschlagene Verfahren entfallen spanende Bearbeitungen aller Bestandteile des Schließzapfens.

Von besonderem Vorteil ist dabei auch noch ein dem Fügevorgang des Befestigungssockels und dem T-förmigen Kopf vorgeschalteter Härtvorgang des T-förmigen Kopfes. Diese, beispielsweise durch Einsatzhärten bewirkte Gefügeänderung, wirkt sich positiv auf die Verschleißfestigkeit des Kopfes aus, die sich andererseits aber insbesondere aber bei dem vorteilhaften Einsatzhärten nicht nachteilig für die Verbindung mit dem Befestigungssockel auswirkt.

Weitere vorteilhafte Ausgestaltungen der Erfindung ergeben sich aus den Figuren. Es zeigt:
- Fig. 1 bis Fig. 3: verschiedene Einsatzfälle eines Beschlages mit einem Schließzapfen,
- Fig. 4: die Herstellung des aus zwei Einzelteilen bestehenden Schließzapfens und
- Fig. 5: dessen Montage an einem Beschlagteil.

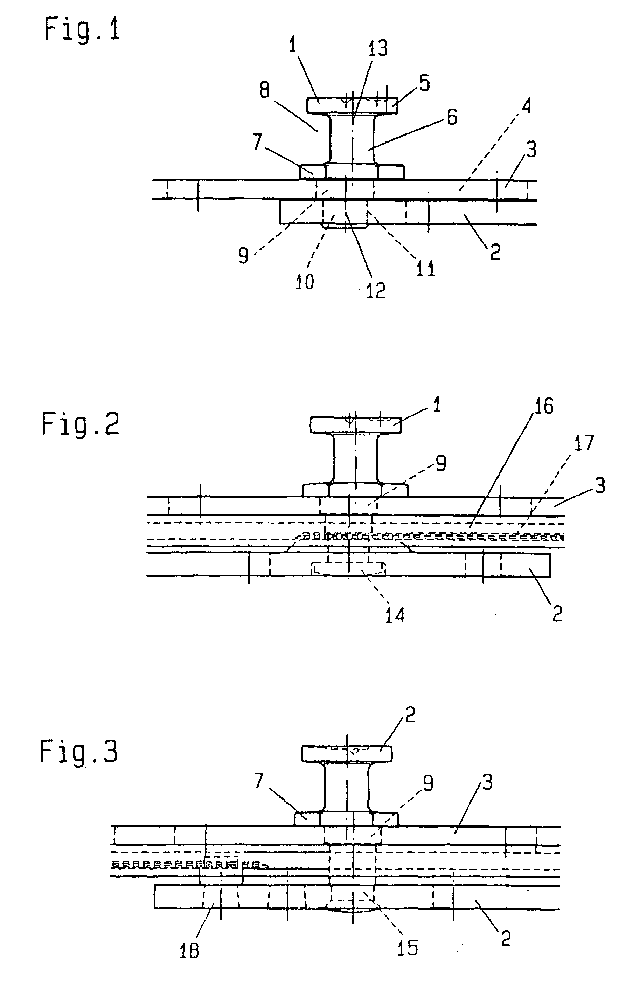

Bei dem in Fig. 1 dargestellten Beschlag ist der Schließzapfen 1 an einer Treibstange 2 befestigt und durchgreift eine Stulpschiene 3 in einem Langloch 4.

Der Schließzapfen 1 ist pilzkopfförmig ausgebildet und weist einen Verriegelungsvorsprung 5 auf, an den sich ein verjüngender Schaft 6 anschließt, der im dargestellten Ausführungsbeispiel einen zylindrischen Querschnitt aufweisen soll. Der Schaft 6 endet in einem Flansch 7, der einen Werkzeugeingriff bildet, wozu dieser als Sechskant ausgeformt ist. Der Flansch 7 ist dabei größer bemessen als die senkrecht zur Zeichnungsebene verlaufende Breite des Langlochs 4, so dass sich der Flansch 7 an den Rändern des Langlochs 4 abstützt. Der Flansch 7 verläuft darüber hinaus koaxial zu dem Schaft 6. Durch den sich verjüngenden Schaft 6 und den sich dagegen erweiternden zylindrischen Verriegelungsvorsprung 5 entsteht ein umlaufender Hinterschnitt 8. An den Flansch 7 schließt sich ein erster Zapfen 9 und ein sich dagegen nochmals verjüngender Zapfen 10 an, die koaxial zueinander aber exzentrisch zu dem Flansch 7 bzw. dem zylindrisch ausgebildeten Verriegelungsvorsprung 5 gelagert sind. Der Zapfen 9 ist dabei auf die Bereite des Langlochs 4 abgestimmt, während der Zapfen 10 eine Bohrung 11 der Treibstange 2 durchgreift. Hinter der Treibstange 2 wird der Zapfen 10 durch einen Nietvorgang verdrückt, so dass dieser relativ zu der Stulpschiene 3 und der Treibstange 2 drehbar aufgenommen ist.

Dadurch kann der gesamte Schließzapfen 1 bei einer Drehung um die Mittelachse 12 je nach Bedarf mit der Achse 13 näher an eine Kante des Riegeleingriffs herangeführt oder von dieser beabstandet werden. Dadurch wird der Andruck des Flügels an den Rahmen justiert.

Bei den in den Fig. 2 und 3 dargestellten Schließzapfen 1 ist der prinzipielle Aufbau entsprechend dem in Fig. 1 dargestellten Schließzapfen 1. Hieran schließen sich aber an den Zapfen 9 unterschiedlich geformte und bemessene Zapfen 14, 15 an, die für weitere Beschlagbauteile des Beschlags, z. B. in Umlenkbauteilen eingesetzt werden, um die in Fig. 2 dargestellte Überbrückung eines zwischen der Treibstange 2 und der Stulpschiene 3 liegenden Führungskanals 16 bewirken zu können. In dem Führungskanal 16 sind biegsame Umlenkglieder 17 vorgesehen, deren Enden über den Zapfen 14 mit der Treibstange 2 verbunden werden.

Bei dem in Fig. 3 dargestellten Ausführungsbeispiel ist hierzu ein spezieller Niet 18 vorgesehen, der Zapfen 15 ist daher nur entsprechend dem größeren Abstand der Treibstange 2 von der Stulpschiene 3 bzw. dem Flansch 7 anzupassen.

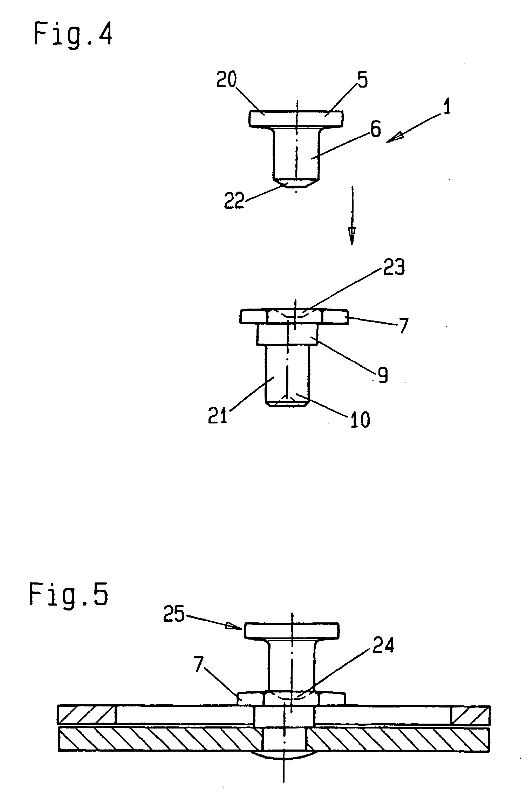

Die Herstellung des Schließzapfens 1 erfolgt dabei aus dem Zusammenfügen des T-förmigen Kopfes 20 und des Befestigungssockels 21, wie in der Fig. 4 erkennbar. Der Kopf 20 ist im dargestellten Ausführungsbeispiel zylindrisch geformt und weist einenends den Verriegelungsvorsprung 5 auf, der in den verjüngenden Schaft 6 übergeht. Am Ende des Schafts 6 ist ein konisch zulaufender Ansatz 22 vorgesehen, der komplementär zu einer Mulde 23 des Befestigungssockels 21 ausgebildet ist. Der Ansatz 22 und die Mulde 23 bilden zusammen eine Verbindungsstelle 24, an der der T-förmige Kopf 20 und der Befestigungssockel 21 miteinander verschweißt werden um gemeinsam den Schließzapfen 1 zu bilden. Die Mulde 23 ist dabei in dem Flansch 7 angebracht, so dass die Verbindungsstelle 24 im wesentlichen im Bereich eines verbreiterenden Bauteilabschnitts liegt. Dadurch kann zum einen die beim Schweißen entstehende Wärme leichter abgeführt werden und zum anderen eine Beeinflussung der darunterliegenden Zapfen 9 und 10 vermieden werden. Ferner bildet der als Werkzeugeingriff ausgebildete Flansch 7 die Möglichkeit einer Aufnahme des Befestigungssockels 21 in einer entsprechenden Vorrichtung, so dass der gesamte Schweißvorgang, der vorzugsweise durch Laserschweißen erfolgen soll, automatisiert ablaufen kann. Das entsprechende Laserschweißverfahren ist deshalb von besonderem Vorteil, da die zu fügenden Bauteile relativ klein bemessen sind und daher eine nur kleine und lokal begrenzte Schweißfläche zur Verfügung steht und andererseits auch eine Wärmebeeinflussung des gesamten Bauteils reduziert werden kann..

Durch die Anordnung des Werkzeugangriffs an dem Flansch 7 wird insbesondere in Verbindung mit der Anordnung der Verbindungsstelle 24 (Fig. 5) ein mögliches Drehmoment auf die Verbindungsstelle verhindert, wenn der Werkzeugeingriff im Bereich des Verriegelungsvorsprungs 5 angebracht wäre. Gegen eine derartige Torsionbeanspruchung sind Schweißverbindungen im allgemeinen besonders empfindlich.

Durch die Formgebung des Kopfes 20 als zylindrischen und T-förmigen Niet kann dieser in einfacher Weise durch einen Fließpressvorgang durch Kaltverformen hergestellt werden. Dies kann bei dem Befestigungssockel 21 in gleicher Art und Weise erfolgen, wobei mit Vorteil aber der Kopf 20 und der Befestigungssockel 21 aus unterschiedlichen Materialien hergestellt oder mittels verschiedener Wärmebehandlungen vorbereitet werden können. Ohne die Verbindung zwischen dem Kopf 20 und dem Befestigungssockel 21 zu schwächen, kann beispielsweise der Kopf 20 aus einer verschleißfesteren Legierung gewählt werden, während hingegen der Befestigungssockel 21 eine die plastische Verformung zur Bildung des in den Fig. 1 bis 3 dargestellten Nietkopfes begünstigenden Materialauswahl getroffen wird.

In der Praxis hat es sich beispielsweise gezeigt, dass ein Einsatzhärten des Kopfes 20 dessen Abriebfestigkeit wesentlich erhöht, dabei aber dessen Schweißbarkeit im wesentlichen erhalten bleibt.

Im Bereich der Schweißnaht stellt sich nämlich durch die am Kopf 20 eingestellte Kohlenstoffanreicherung und die im Befestigungssockel 21 gegebene Normalverteilung des Kohlenstoffs ein Mischgefüge ein, welches nur geringe oder kleine Einschlüsse beinhaltet. Dies wird auch dadurch begünstigt, dass beim Einsatzhärten eine Kohlenstoffanreicherung nur an der Oberfläche erfolgt.

Ein weiterer Vorteil ergibt sich augenscheinlich bereits dadurch, dass mit ein und demselben Kopf 20 alle in den Fig. 1 bis 3 dargestellten Einsatzfälle hergestellt werden können. Hierzu ist es lediglich erforderlich, die Flansche 7 entsprechend den verschiedenen Ausgestaltungen nach Fig. 1 bis 3 herzustellen und in Verbindung mit dem Kopf 20 zu bringen. Umgekehrt ist es natürlich auch möglich, den Kopf 20 entsprechend den verschiedenen Einsatzgebieten, z.B. in der Länge oder in den sonstigen Abmessungen und ggf. sogar in einer von der zylindrischen Form abweichenden Form, mit den Befestigungssockeln 21 zu kombinieren.

Ein entsprechendes Verfahren zur Herstellung des Schließzapfens 1 würde daher im wesentlichen die Verbindung des T-förmigen Kopfes 21 und des Befestigungssockels 22 über einen Schweißvorgang, vorzugsweise durch ein Laserschweißverfahren, beinhalten.

Um die mechanischen Eigenschaften des in Wirkverbindung mit dem Riegeleingriff tretenden Bestandteil des Schließzapfens 1 zu verbessern, kann dabei dem eben genannten Verfahren ein Härtevorgang des T-förmigen Kopfes 20 vorangehen.

Wie aus der Fig. 5 noch deutlich wird, liegt die Verbindungsstelle 24 im dargestellten Ausführungsbeispiel im Bereich des Flansches 7.

Um die Belastung der Verbindungsstelle 24 möglichst gering zu halten, die beispielsweise bei einer Querkraft in Richtung des Pfeiles 25 oder senkrecht zur Zeichnungsebene erfolgt, kann vorgesehen werden, dass die Mulde 23 und der Ansatz 22 einen Abschnitt erhalten, der die Kippkräfte formschlüssig in das jeweils andere Bauteil überträgt. Dazu ist der Ansatz 22 mit einem außen umlaufenden zylindrischen Abschnitt zu versehen, der auf einer Stufe der Mulde 23 aufsitzt. Dadurch würde sich der zylindrische Absatz bei einer Querbelastung in Richtung 25 zunächst auf der Stufe abstützen und die Verbindungsstelle 25 zunächst nur auf Zug beansprucht.

Abschließend soll nochmals darauf hingewiesen werden, dass das dargestellte Ausführungsbeispiel anhand der zylindrischen Schließzapfen 1 selbstverständlich auch auf andere Formen von Verriegelungszapfen übertragbar ist. Es ist selbstverständlich auch möglich, anstelle des hier bevorzugt genannten Laserschweißens andere Schweißverfahren einzusetzen, die zum selben Ergebnis kommen.

Neben der Herstellung von Schließzapfen kann darüber hinaus das beschriebene Verfahren auch für andere Beschlagteile verwendet werden. So sind beispielsweise Bolzen für Scharniere ebenfalls mit unterschiedlichen Querschnitten und unterschiedlichen Legierungen und/oder Wärmebehandlungen denkbar. Die Scharnierflächen bildenden Bereiche des Bolzen müssen verschleißfest gestaltet werden und sind bezüglich der Oberfläche anspruchsvoll auszugestalten, während die Bereiche zur Montage und Festlegung des Bolzens unterschiedliche Querschnitte und auch Querschnittsformen aufweisen können. Diese Bereiche können dabei auch bezüglich der Oberfläche in der Regel einfacher gestaltet werden.

Die Bolzen von Ecklagem von Drehkipp-Beschlägen weisen z.B. neben dem eigentlichen Schamierabschnitt eine U-förmige Gabel oder eine Öse auf, mit der der Bolzen einer Stellschraube des Ecklagers zugeordnet werden kann. Hierbei kann der zylindrische Scharnierabschnitt und die Gabel bzw. Öse getrennt hergestellt und wärmebehandelt werden und anschließend zusammengefügt werden.

### Bezugszeichenliste:

- 1: Schließzapfen
- 2: Treibstange
- 3: Stulpschiene
- 4: Langloch
- 5: Verriegelungsvorsprung
- 6: Schaft
- 7: Flansch
- 8: Hinterschnitt
- 9: Zapfen
- 10: Zapfen
- 11.: Bohrung
- 12: Mittelachse
- 13: Achse
- 14: Zapfen
- 15: Zapfen
- 16: Führungskanal
- 17: Umlenkglieder
- 18: Niet
- 20: Kopf
- 21: Befestigungssockel
- 22: Ansatz
- 23: Mulde
- 24: Verbindungsstelle
- 25: Richtung

## Patentansprüche

1. Beschlag für ein Fenster oder eine Tür mit mindestens einer verschiebbaren Treibstange (2), an der mindestens ein Schließzapfen (1) und/oder Riegeleingriff befestigt ist, wobei der Schließzapfen (1) von dem Flügel- oder Rahmenfalz in die Flügelebene vorsteht, und in der Schließstellung der Treibstange (22) der Schließzapfen (1) ein am Rahmen- oder Flügelfalz angebrachten Riegeleingriff hintergreift,
wobei an dem Schließzapfen (1) ein Verriegelungsvorsprung (5) vorgesehen ist, der einen Hinterschnitt an dem Schließzapfen (1) bildet und der einen hinterschnittenen Bereich des Riegeleingriffs zumindest in der Verschlussstellung hintergreift,
**dadurch gekennzeichnet,**
**dass** der Schließzapfen (1) aus einem T-förmigen Kopf (20) und einem Befestigungssockel (21) besteht, die an einer Verbindungsstelle (24) miteinander verschweißt sind, vorzugsweise durch Laserschweißen.

2. Beschlag nach Anspruch 1,
**dadurch gekennzeichnet,**
**dass** der Befestigungssockel (21) und der Kopf (20) aus Metallkörpern unterschiedlichen Legierungen und/oder Wärmebehandlung bestehen.

3. Beschlag nach Anspruch 2,
**dadurch gekennzeichnet,**
**dass** der Befestigungssockel (21) im wesentlichen leichter verformbar ist als der Kopf (20) und dass der Befestigungssockel (21) über eine Nietverbindung der Treibstange (2) zugeordnet ist.

4. Beschlag nach Anspruch 1 bis 3,
**dadurch gekennzeichnet,**
**dass** der Kopf (20) einsatzgehärtet ist.

5. Beschlag nach einem der Ansprüche 1 bis 4,
**dadurch gekennzeichnet,**
**dass** die Verbindungsstelle (24) aus einer Mulde (23) im Befestigungssockel (21) und einem komplementär dazu geformten Ansatz (22) am Kopf (20) besteht.

6. Beschlag nach Anspruch 5,
**dadurch gekennzeichnet,**
**dass** die Mulde (23) in einem verbreiterten Flansch (7) vorgesehen ist.

7. Beschlag nach einem der Ansprüche 5 oder 6,
**dadurch gekennzeichnet,**
**dass** sich der Ansatz (22) an den verjüngenden Schaft (6) des T-förmigen Kopfes (20) anschließt.

8. Verfahren zur Herstellung eines Schließzapfens (1) mit einem gegenüber einem Schaft (6) verbreiterten Verriegelungsvorsprung (5), der einen Hinterschnitt (8) an dem Schließzapfen (1) zum Hintergreifen eines hinterschnittenen Bereichs eines Riegeleingriffs bildet, und einen Befestigungssockel (21) zur Verbindung mit einem Beschlagteil (2, 3) aufweist,
**dadurch gekennzeichnet,**
**dass** der Schaft (6) mit dem Verriegelungsvorsprung einen T-förmigen Kopf (20) bildet, der mittels eines Schweißvorgangs, vorzugsweise durch Laserschweißen, mit dem Befestigungssockel (21) zusammengefügt wird.

9. Verfahren nach Anspruch 8,
**gekennzeichnet durch** einen vorgeschalteten Härtevorgang des T-förmigen Kopfes (20).

## Claims

1. A fitting for a window or a door with at least one displaceable positioning bar (2) on which there is fixed at least one locking pin (1) and/or bolt engagement means, the locking pin (1) projecting from the leaf or frame rebate into the leaf plane and, in the locking position of the positioning bar (22), the locking pin (1) engages behind a bolt engagement means formed on the frame or leaf rebate, a locking projection (5) being provided on the locking pin (1) and forming an undercut on the locking pin (1) and engaging behind an undercut zone of the bolt engagement means at least in the locking position, **characterised in that** the locking pin (1). consists of a T-shaped head (20) and a fixing pedestal (21), which are welded together, preferably by laser welding, at a connecting point (24).

2. A fitting according to claim 1, **characterised in that** the fixing pedestal (21) and the head (20) consist of metal bodies of different alloys and/or heat treatment.

3. A fitting according to claim 2, **characterised in that** the fixing pedestal (21) is substantially more readily deformable than the head (20) and **in that** the fixing pedestal (21) is associated with the positioning bar (2) via a rivet connection.

4. A fitting according to claims 1 to 3, **characterised in that** the head (20) is case-hardened.

5. A fitting according to any one of claims 1 to 4, **characterised in that** the connecting point (24) consists of a trough (23) in the fixing pedestal (21) and an attachment (22) of complementary shape thereto on the head (20).

6. A fitting according to claim 5, **characterised in that** the trough (23) is provided in a widened flange (7).

7. A fitting according to claim 5 or 6, **characterised in that** the attachment (22) adjoins the tapering shank (6) of the T-shaped head (20).

8. A method of making a locking pin (1) with a locking projection (5) which is wider than a shank (6) and which forms an undercut (8) on the locking pin (1) to engage behind an undercut zone of a bolt engagement means, and a fixing pedestal (21) for connection to a fitting part (2,3) **characterised in that** the shank (6) together with the locking projection forms a T-shaped head (20) which is joined to the fixing pedestal (21) by a welding process, preferably by laser welding.

9. A method according to claim 8, **characterised by** a preceding hardening of the T-shaped head (20).

## Revendications

1. Ferrure pour une fenêtre ou une porte, avec au moins une tringle d'actionnement (2) à laquelle sont fixés au moins un tourillon de fermeture (1) et / ou un organe de verrouillage, le tourillon de fermeture (1) étant en saillie de la feuillure de l'ouvrant ou du châssis, dans le plan de l'ouvrant, et le goujon de fermeture (1), en position de fermeture de la tringle d'actionnement (2), s'engageant derrière un organe de verrouillage qui équipe la feuillure du châssis ou de l'ouvrant, un nez de verrouillage (5), prévu sur le tourillon de fermeture (1), formant une contre-dépouille dans ledit tourillon de fermeture (1) et s'engageant derrière une section en contre-dépouille de l'organe de verrouillage, au moins en position de fermeture,
**caractérisé en ce que**
le tourillon de fermeture (1) est formé d'une tête (20) en forme de T et d'un socle de fixation (21) qui sont soudés ensemble à un point de jointure (24), préférentiellement par soudure au laser.

2. Ferrure selon la revendication 1,
**caractérisée en ce que**
le socle de fixation (21) et la tête (20) consistent en des corps métalliques en alliages différents et / ou ayant subi un traitement thermique différent.

3. Ferrure selon la revendication2,
**caractérisée en ce que**
le socle de fixation (21) est considérablement plus malléable que la tête (20), et **en ce que** ledit socle de fixation (21) est associé à la tringle de commande (2) par un assemblage rivé.

4. Ferrure selon les revendications 1 à 3,
**caractérisée en ce que**
la tête (20) est cémentée.

5. Ferrure selon une revendication 1 à 4,
**caractérisée en ce que**
la jointure (24) consiste en un creux (23) pratiqué dans le socle de fixation (21) et en une saillie complémentaire (22) qui équipe la tête (20).

6. Ferrure selon la revendication 5,
**Caractérisée en ce que**
le creux (23) est prévu dans une bride élargie (7).

7. Ferrure selon une revendication 5 ou 6,
**caractérisée en ce que**
la saillie (22) prolonge la tige (6) de la tête en forme de T (20) qui s'amincit.

8. Procédé pour la fabrication d'un goujon de fermeture (1) avec une saillie de verrouillage (5) élargie par rapport à la tige (6), laquelle saillie forme une contre-dépouille (8) sur le tourillon de fermeture (1) pour s'engager derrière une section en contre-dépouille d'un organe de verrouillage, et présente un socle de fixation (21) pour le raccordement à une partie de la ferrure (2, 3),
**caractérisé en ce que**
la tige (6) forme avec la saillie de verrouillage une tête en forme de T (20) qui est reliée au socle de fixation (21) par soudure, de préférence par soudure au laser.

9. Procédé selon la revendication 8,
**caractérisé par** un processus de durcissement préalable de la tête en forme de T (20).
